# EUROPÄISCHE PATENTSCHRIFT

(11) **EP 1 623 256 B1**
(45) Veröffentlichungstag und Bekanntmachung des Hinweises auf die Patenterteilung: **22.07.2009**
(21) Anmeldenummer: 04731125.3
(22) Anmeldetag: 05.05.2004
(51) Int. Cl.: G02B 6/42, B29C 45/14

(54) **MIKROOPTIKMODUL MIT SPRITZGEGOSSENEM GEHÄUSE UND VERFAHREN ZUR HERSTELLUNG DESSELBEN**
MICRO-OPTICAL MODULE WITH INJECTION-MOULDED HOUSING AND METHOD FOR PRODUCTION THEROF
MODULE MICRO-OPTIQUE POURVU D'UN BOITIER MOULE PAR INJECTION ET PROCEDES DE FABRICATION DUDIT MODULE

(30) Priorität: 15.05.2003 DE 10322071
(43) Veröffentlichungstag der Anmeldung: 08.02.2006
(73) Patentinhaber: Infineon Technologies AG, 81669 München (DE)
(72) Erfinder: DANGELMAIER, Jochen, 93176 Beratzhausen (DE); THEUSS, Horst, 93173 Wenzenbach (DE); WIETSCHORKE, Helmut, 93049 Regensburg (DE)
(74) Vertreter: Schäfer, Horst
(86) Internationale Anmeldenummer: PCT/DE2004/000944
(87) Internationale Veröffentlichungsnummer: WO 2004/104665

(56) Entgegenhaltungen:
- WO-A-00/55665
- WO-A-20/04031817
- DE-A- 10 023 463
- US-B1- 6 550 983
- PATENT ABSTRACTS OF JAPAN Bd. 2000, Nr. 14, 5. März 2001 (2001-03-05) -& JP 2000 322990 A (OMRON CORP), 24. November 2000 (2000-11-24)

## Beschreibung

Die Erfindung betrifft ein Mikrooptikmodul mit Gehäuse, das mindestens ein optoelektronisches Bauteil und eine diesem Bauteil zugeordnete Optoelektronik aufweist.

Optikmodule sind modular aus mehreren Komponenten aufgebaut und zusammengestellt. So weist ein derartiges Optikmodul, wie es aus der Druckschrift US 4,478,479-B1 bekannt ist, ein optisches Modul, eine Gehäusekomponente und eine Steckerkomponente auf. Diese Komponenten sind zu einem Optikmodul zusammengebaut. Dabei weist das optische Modul eine Aufnahmeöffnung mit einem eingesteckten gehäusten Lichtsendeelement mit zusätzlich angebauter Sendefokussiereinrichtung und eine weitere Aufnahmeöffnung mit einem gehäusten Lichtempfangselement mit zusätzlich angebauter Empfangsfokussiereinrichtung auf. Die Gehäusekomponente weist zwei optische Pfade, einen Sendepfad und einen Empfangspfad mit gebogenen Glasfaserstücken eines Glasfaserwellenleiters auf, die in die Steckerkomponente einsteckbar sind und an zwei Faserstränge eines Wellenleiters mit Hilfe der Steckerkomponente ankoppelbar sind.

Ein Nachteil eines derartigen Optikmoduls, das aus obigen Komponenten zusammengesteckt ist, bildet der Raumbedarf, der eine Miniaturisierung behindert. Ein weiterer Nachteil ist die Vielfalt der Komponenten, die mit ihren Toleranzen den optischen Kopplungsanforderungen nicht immer erfüllen, wobei eine optische Anpassung und Ausrichtung schwierig und aufwendig ist und eine permanente Fehlerquelle darstellt.

Die JP 2000 322990 A offenbart ein Sensorbauteil mit einer öffnung, das als MID-Modul ausgeführt ist. Die Geometrie dieses Bauteils eignet sich allerdings nicht zum Einkoppeln elektromagnetischer Signale mittels einer optischen Faser.

Die DE 100 23 463 A1 offenbart einen Steckverbinder für Lichtwellenleiter, der eine Aufnahmeöffnung zum Einstecken einer optischen Faser aufweist, wobei hinter der Aufnahmeöffnung ein optoelektronisches Bauteil angeordnet ist. Bei diesem Bauteil ist nachteilig, dass es verhältnismäßig aufwendig aufgebaut und einer Miniaturisierung nur schwer zugänglich ist.

Aufgabe der Erfindung ist es, ein Mikrooptikmodul mit Gehäuse und Verfahren zur Herstellung desselben anzugeben, das die obigen Nachteile überwindet und eine weitergehende Miniaturisierung zulässt.

Diese Aufgabe wird mit dem Gegenstand der unabhängigen Ansprüche gelöst. Vorteilhafte Weiterbildungen ergeben sich aus den abhängigen Ansprüchen.

Erfindungsgemäß weist das Mikrooptikmodul ein Gehäuse auf, das mindestens ein optoelektronisches Bauteil, sowie diesem zugeordnete Optoelektronik enthält. Außerdem ist das Gehäuse zumindest teilweise als MID-Körper, einem sogenannten Molded Interconnect Device, ausgeführt. Darüber hinaus weist das Mikrooptikmodul eine dreidimensionale Leiterstruktur auf, welche die im Optoelektronikmodul dreidimensional verteilten Bauteile elektrisch miteinander verbindet. Das Gehäuse weist mindestens eine Aufnahmeöffnung zum Einstecken eines Strahlungsleiters in einem Einsteckbereich auf. Es weist ferner mindestens einen mit einem in den MID-Körper eingegossenen Kunststoffwellenleiter aufgefüllten optischen Kanal auf, der mit der Aufnahmeöffnung optisch gekoppelt ist.

Ein derartiges Mikrooptikmodul in MID-Bauweise hat den Vorteil, dass aufgrund einer weiterentwickelten Moldtechnik ein kompaktes Bauteil zur Verfügung steht, das mehrere bisher steckbaren Komponenten in sich vereinigt. Damit entfällt jede Nachjustage und jedes optische Anpassen der Komponenten zueinander. Der MID-Körper bildet eine kompakte Einheit und weist bereits die gesamte dreidimensionale elektrische Leiterstruktur bis auf die nachträglich zu bestückende Optoelektronik mit aktiven und passiven Bauelementen, sowie das nachträglich einzubauende optoelektronische Bauteil auf. Die Leiterstruktur verbindet die räumlich verteilten elektronischen und optoelektronischen Komponenten in dem Mikrooptikmodul untereinander und nach Außen zu einem Außenkontaktbereich.

Darüber hinaus hat das Mikrooptikmodul den Vorteil, dass in seinem Hohlraum mit dreidimensionaler Leiterstruktur Halbleiterchips mit Außenkontaktflächen als optoelektronische und/oder elektrooptische Bauteile, sowie Elektronikbauteile ohne zusätzliche Gehäuse eingebaut werden können, so dass eine weitergehende Miniaturisierung möglich wird.

Im Inneren des MID-Körpers kann mindestens ein von Wänden umgebener Hohlraum vorgesehen sein, und diese Wände können einen Teil der dreidimensionalen Leiterstruktur aufweisen. Darüber hinaus können die Wände des Hohlraums mit Bauteilen der Optoelektronik bestückt sein. Damit wird das Innere des MID-Körpers intensiv genutzt, zumal sich die Anordnung der Bauelemente nicht nur auf eine ebene Leiterplatte erstreckt, sondern aufgrund der dreidimensionalen Leiterstruktur sämtliche Wände des Hohlraums im Innern des MID-Körpers nutzt und bestückt sind.

Darüber hinaus kann das Gehäuse eine Außenwand aufweisen, die eine Abschirmschicht trägt. Eine derartige Abschirmschicht auf dem MID-Körper sichert einen Schutz gegen magnetische, elektromagnetische und/oder Korpuskularstrahlung. Außerdem verhindert sie ein Übersprechen von einem Mikrooptikmodul zum anderen Mikrooptikmodul.

Das Gehäuse weist mindestens eine Aufnahmeöffnung zum Einstecken eines Strahlungsleiters in einem Einsteckbereich auf. Ein Strahlungsleiter kann neben sichtbaren elektromagnetischen Wellen auch IR-, UV- oder Röntgenstrahlung führen und leiten. Anstelle eines Strahlungsleiters kann der Einsteckbereich auch derart ausgebildet sein, dass ein optischer Sender, wie eine Laserdiode oder ein anderer optischer Emitter, einsteckbar ist.

Das Gehäuse weist darüber hinaus einen mit einem Kunststoffwellenleiter aufgefüllten optischen Kanal auf, der mit der Aufnahmenöffnung in dem Einsteckbereich optisch gekoppelt ist. Ein derartiger Kunststoffwellenleiter ist in den MID-Körper eingegossen, so dass sich eine Nachjustage für einen sich dreidimensional erstreckenden Kunststoffwellenleiter erübrigt.

Dabei wird der optische Kanal vollständig von dem Kunststoffwellenleiter aufgefüllt. Ein derartiger eingegossener Kunststoffwellenleiter unterscheidet sich gegenüber einem dreidimensional gebogenem Glasfaserstück eines Glasfaserwellenleiters einerseits durch sein Material, beispielsweise einem gießbaren Acrylharz, das weniger spröde ist, als ein Glasfaserstück und durch seinen homogenen Materialaufbau bei dem eine graduelle und radiale Zunahme des Brechungsindex über dem Querschnitt, wie bei Glasfaserstücken, unterbleibt, was durch Verspiegelung des Mantels des Kunststoffwellenleiters kompensiert werden kann.

Mit einem eingegossen Kunststoffwellenleiter ist der Vorteil verbunden, dass er exakt den Bedürfnissen einer dreidimensionalen Führung der optischen Signale in dem Mikrooptikmodul angepaßt werden kann. Darüber hinaus ist sein Querschnitt nicht auf die Kreisform eines Glasfaserstücks beschränkt, so dass quadratische und/oder rechteckige und/oder dreieckige Querschnittsformen realisierbar sind. Ferner können Prismenformen und Umlenkspiegelflächen für den Kunststoffwellenleiter vorgesehen werden.

Darüber hinaus können in seine Enden Fokussiereinrichtungen eingegossen sein, welche in ihrer optischen Ausrichtung mit dem Gießen des Kunststoffwellenleiters fixiert sind, womit sich eine Nachjustage erübrigt. Insbesondere können optische Linsen in seinem Anfangsbereich und/oder in seinem Endstück mit eingegossen sein. Auch die Linsen können ein Kunststoffmaterial aufweisen, das sich jedoch in seinem Brechungsverhalten von dem Kunststoffwellenleiter unterscheidet, um eine fokussierende oder defokussierende Wirkung zu erzeugen.

Der Einsteckbereich des Gehäuses kann sowohl optoelektronisch, als auch elektrooptisch genutzt werden. Der Unterschied zwischen diesen beiden Einsteckbereichen liegt lediglich in der Verarbeitungsrichtung der optischen Signale. Während in einem elektrooptischen Einsteckbereich ein Element einsteckbar ist, das elektrische Signale in optische Signale umsetzt, wird in einem optoelektronischen Einsteckbereich ein Element eingesetzt, das optische Signale in elektrische Signale umsetzt. Diese Einsteckbereiche können im Gehäuse sowohl von außen zugänglich sein, als auch mit einem mit Optoelektronik bestückten Hohlraum innerhalb des Gehäuses eingebaut sein.

In dem Hohlraum können ungehäuste optische Sende- und/oder Empfangsdioden in Form von Halbleiterchips angeordnet sein, deren optisch aktive Flächen zu entsprechenden Kunststoffwellenleitern hin ausgerichtet sind, deren Elektroden und/oder Kontaktflächen mit der dreidimensionalen Leiterstruktur elektrisch verbunden sind. Eine derartige Ausführungsform der Erfindung liefert ein Mikrooptikmodul, das kompakt aufgebaut ist und auf kleinstem Raum eine optoelektronische oder eine elektrooptische Wandlung von Signalen ermöglicht.

Der Hohlraum in dem MID-Körper kann eine Trennwand aufweisen, die den Hohlraum in einen Sende- und einen Empfangsbereich trennt. Eine derartige Trennwand soll ein Übersprechen vom Sende- zum Empfangsbereich verhindern und weist dafür eine metallische Abschirmschicht auf. Andererseits kann die Trennwand auch für die Positionierung von Bauteilen der Optoelektronik dienen, die großflächig zu kühlen sind und/oder großflächig an ein Massepotential zu legen sind.

Ferner ist es möglich, metallische Wärmesenken in den MID-Körper mit einzugießen, auf denen Optoelektronikbauteile mit hoher Verlustwärme aufgebracht sein können. Die Wirkung derartiger eingegossener Wärmesenken kann dadurch verstärkt werden, dass sie mit einer äußeren Abschirmschicht des Gehäuses wärmeleitend verbunden sind.

Das gegossene Gehäuse kann im Bodenbereich des Hohlraums eine Leiterplatte mit aktiven und passiven Schaltungselementen mit einer Leiterstruktur aufweisen, die mit den Leiterstrukturen an den Wänden des Hohlraums zusammenwirkt. Anstelle einer Leiterplatte können auch Flachleiterstrukturen in dem MID-Körper eingegossen sein, die einerseits eine elektrische Verbindung und andererseits eine Wärmeleitungsverbindung nach außen darstellen. Darüber hinaus können Durchkontaktleitungen durch die Wände des MID-Körpers vorgesehen werden, die auf der Außenseite des Gehäuses mit entsprechenden elektrischen Außenkontakten in Verbindung stehen. Da diese Komponenten gleichzeitig mit einem Gieß- oder Druckgießprozess des MID-Körpers mechanisch miteinander verbunden werden, erübrigt sich jede Nachjustierung oder Einstellung an dem Mikrooptikmodul.

Ein Verfahren zur Herstellung eines Mikrooptikmodul weist die nachfolgenden Verfahrensschritte auf. Zunächst wird ein dreidimensionaler optischer Wellenleiter spritzgegossen. Die Bezeichnung dreidimensional bezieht sich hier auf den Verlauf der zentralen Achse des Wellenleiters, der mehrfach gekrümmt und gewunden konstruiert sein kann. Anschließend werden Wellenleiter und eine dreidimensionale Leitungsstruktur in einer Spritzgussform für ein Gehäuse mit.Hohlraum eingebracht, ausgerichtet und positioniert. Anschließend wird zumindest teilweise ein als MID-Körper ausgeführtes Gehäuse spritzgegossen. Dabei bilden die eingebrachten, positionierten und ausgerichteten optoelektonischen Halbleiterchips und die Leitungen der dreidimensionalen Leiterstruktur, die in der Spritzgussform vorhanden sind eine mechanisch fixierte Baueinheit, die nicht nachzujustieren ist.

Die dreidimensionale Leiterstruktur kann auch nach dem Spritzen des MID-Körpers in den Hohlraum bzw. auf die Oberflächen und auf die Wände des Hohlraumes aufgebracht werden. In diesem Fall entsteht eine Leiterstruktur mit an den Wänden des Hohlraums verlaufenden Leiterbahnschichten. Danach kann der Hohlraum des Gehäuses mit mindestens einem optoelektronischen Bauteil, sowie einer Optoelektronik bestückt werden. Während das optoelektronische Bauteil eine aktive Laserdiode oder eine aktive Photodiode sein kann, besteht die Optoelektronik sowohl aus passiven, als auch aus aktiven Bauelementen, wie integrierten Schaltungen, welche die elektrischen Signale des optoelektronischen Bauteils verarbeiten.

Die Wirkung des Kunststoffwellenleiters kann verstärkt werden, wenn vor dem Spritzgießen des Moldgehäuses der Wellenleiter mit einer reflektierenden Schicht ummantelt wird. Eine derartige reflektierende Schicht gewährleistet einen hohen Brechungsindexsprung und verstärkt die Akkumulation des Strahls innerhalb des optischen Kanals des Mikrooptikmoduls.

Vor dem Spritzgießen des Moldgehäuses können an die Enden des Wellenleiters optische Kopplungselemente angegossen werden. Sofern diese Kopplungselemente aus einem transparenten Kunststoff bestehen, weist dieser einen von dem Wellenleiterende unterschiedlichen Brechungsindex auf, um eine Fokussierung oder Defokussierung des optischen Strahls, der von dem Kunststoffwellenleiter in dem optischen Kanal des Mikrooptikmoduls geführt wird, zu ermöglichten.

Zusammenfassend ist festzustellen, dass sich durch die Integration von optischen, mechanischen und elektrischen Funktionen in einem Mikrooptikmodul ein optischer Überträger verwirklichen lässt, der die nachfolgenden Vorteile aufweist:
- Einfache Montage und Justage durch Wegfall diskreter Einzelkomponenten, wie Leiterplatten, Linsen, Steckeinheiten oder gehäuster optoelektronischer Bauteile,
- Realisierung eines integralen Gesamtsystems anstelle von Einzelkomponenten, die zusammenzustecken und zu justieren sind,
- Möglichkeit einer einfachen Änderung des Designs bei höheren Datenraten mit neuen elektronischen Komponenten,
- Möglichkeit der Montage in SMD-Technik (Surface Mounted Device Technique)
- Möglichkeit der SMD-Montage über lötbare Außenkontaktflächen oder über Lotbälle,
- ein MID-Körper (Molded Interconnect Device Körper) dient als Funktionsträger für alle geforderten elektrischen, optischen und mechanischen Eigenschaften.

Die Erfindung wird nun anhand der beigefügten Figuren näher erläutert.
- Figur 1: zeigt eine Prinzipskizze eines Mikrooptikmodul in einem optoelektronischen Leitungspfad gemäß einer ersten Ausführungsform der Erfindung,
- Figur 2: zeigt einen schematischen Querschnitt durch ein Mikrooptikmodul, gemäß einer zweiten Ausführungsform der Erfindung,
- Figur 3: zeigt einen schematischen Querschnitt durch ein Mikrooptikmodul, gemäß einer dritten Ausführungsform der Erfindung,

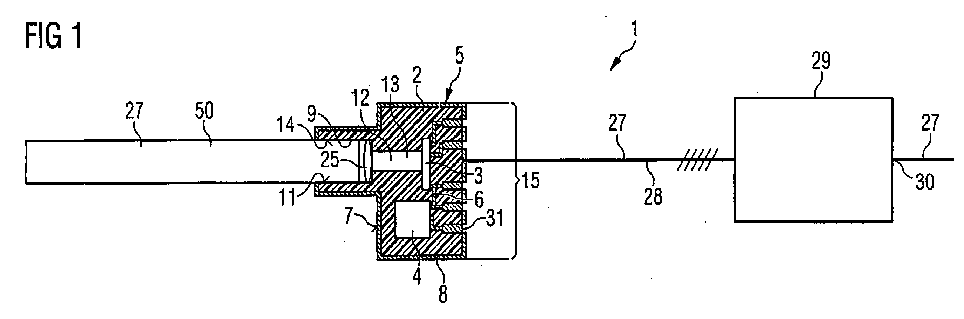

Figur 1 zeigt eine Prinzipskizze eines Mikrooptikmoduls 1 in einem optoelektronischen Leitungspfad 27. Dieser Leitungspfad 27 weist einen externen Strahlungsleiter 50, das Mikrooptikmodul 1, elektrische Verbindungsleitungen 28, wie einen mehradrigen Bus, eine Leiterplatte 29 mit einer Auswerteschaltung und einer elektrooptischen Schnittstelle zu einer weiterführenden optischen Achse 30 auf.

Das Mikrooptikmodul 1 weist einen MID-Körper 5, ein sogenanntes Molded Interconnect Device auf, der einen eingegossenen Kunststoffwellenleiter 12 in einem optischen Kanal 13 umschließt. Darüber hinaus weist der MID-Körper 5 in einem Hohlraum eine Leiterstruktur 6 auf, die mindestens ein optoelektronisches Bauteil 3 mit einer Optoelektronik 4 und mit einem elektrischen Anschlussbereich 15 mit Außenkontakten 31 des Mikrooptikmoduls verbindet.

In einem Einsteckbereich 11 weist das Mikrooptikmodul 1 einen optoelektronischen Einsteckbereich 14 auf. In diesen optoelektronischen Einsteckbereich 14 wird der externe Strahlungsleiter 50 des optoelektronischen Leitungspfades 27 in eine Aufnahmeöffnung 9 eingesteckt. Für eine optische Kopplung zwischen externem Strahlungsleiter 50 und internem Kunststoffwellenleiter 12 weist ein optischer Kanal 13 in dem MID-Körper 5 ein optisches Kopplungselement 25 auf, das eine in den MID-Körper eingegossene Linse ist. Diese Linse fokussiert die Strahlen auf den Kunststoffwellenleiter 12, die von dem optoelektronischen Bauteil 3 am Ende des Kunststoffwellenleiters 12 in elektrische Energie umgesetzt werden.

Werden optische Signale über den externen Strahlungsleiter 50, das optische Kopplungselement 25, den Kunststoffwellenleiter 12 zu dem optoelektronischen Bauteil 3 gesandt, so setzt dieses optoelektronische Bauteil 3 die optischen Signale in elektrische Signale um. Die elektrischen Signale werden über die Leiterstruktur 6, und die Optoelektronik 4 an den Leitungsbus der elektrischen Verbindungsleitung 28 über die Außenkontakte 31 des Mikrooptikmoduls 1 zum Eingang der Leiterplatte 29 ausgegeben.

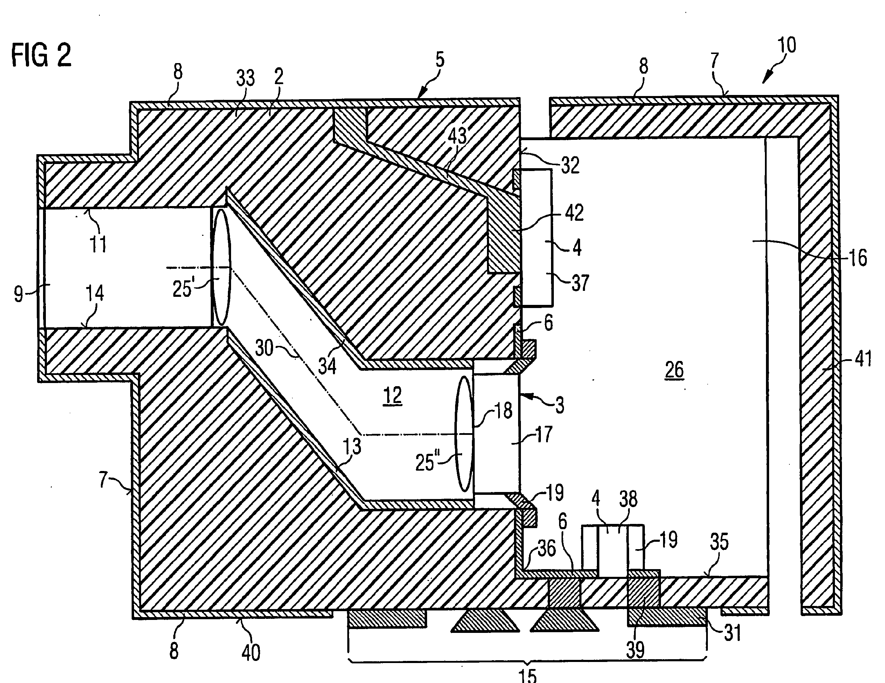

Figur 2 zeigt einen schematischen Querschnitt durch ein Mikrooptikmodul 10 einer zweiten Ausführungsform der Erfindung. Komponenten mit gleichen Funktionen wie in Figur 1 werden mit gleichen Bezugszeichen gekennzeichnet und nicht extra erörtert.

Das Mikrooptikmodul 10 weist ein Gehäuse 2 auf, das aus einem gegossenen MID-Körper besteht und an seiner Außenwand 7 von einer Abschirmschicht 8 bedeckt ist. Die Abschirmschicht 8 besteht aus seinem Abschirmmetall und schützt das Mikrooptikmodul 10 vor magnetischen und elektromagnetischen Streustrahlen, sowie vor optischer Strahlung, so dass auch ein Tag-Nacht-Wechsel die Funktionsfähigkeit des Mikrooptikmoduls 10 nicht beeinträchtigt.

In dem MID-Körper 5 ist ein optischer Kanal 13 vorgesehen. Der optische Kanal ist durch einen Kunststoffwellenleiter 12 aufgefüllt und weist eine abgeknickte optische Achse 30 auf, die räumlich gekrümmt ist und somit einen dreidimensionalen Kunststoffwellenleiter ausbildet. An den optischen Einkopplungs- und Auskopplungsenden des Kunststoffwellenleiters 12 sind optische Kopplungselemente 25 in Form von Linsen angeordnet, die in den Kunststoffwellenleiter 12 eingegossen sind. Die Manteloberfläche des Kunststoffwellenleiters 12, ist von einer reflektierenden Schicht 34 umgeben.

Diese reflektierende Schicht 34 wird vor dem Einbetten des Kunststoffwellenleiters 12 in eine Kunststoffmasse 33 des MID-Körpers 5 aufgebracht. Ein äußeres Koppelelement 25', das in den Wellenleiter 12 eingegossen ist, ist im Einsteckbereich 11 des Gehäuses 2 positioniert. Dieser Einsteckbereich 11 ist mit einer Aufnahmeöffnung 9 derart dimensioniert, dass eine einzelne Glasfaser eines mehradrigen Strahlungsleiters dort eingesteckt werden kann. Der Einsteckbereich 11 des Mikrooptikmoduls 10 ist ein optoelektronischer Einsteckbereich 14. Demgegenüber ist ein inneres optisches Koppelelement 25", das in dem inneren Ende des Kunststoffwellenleiters eingegossen ist, zu einem Hohlraum 26 des MID-Körpers 5 hin angeordnet. An das innere Koppelelement 25" ist ein optoelektronisches Bauteil 3 mit einer optischaktiven Fläche 18 angeschlossen. Dieses ist in der Lage, optische Signale, die über das optische Koppelelement eingekoppelt werden, in elektrische Signale umzuwandeln, die über Elektroden 19 an eine dreidimensionale Leiterstruktur 6 gegeben werden.

Diese dreidimensionale Leiterstruktur 6 ist in einem Hohlraum des MID-Körpers 5 angeordnet und erstreckt sich über die Innenwände 32 und 35 des Hohlraums und verbindet über Hohlraumecken 36 entsprechend räumlich angeordnete Bauteile 37, 38 einer Optoelektronik 4, die in dieser Ausführungsform mindestens einen Halbleiterchip 37 und ein passives Bauteil 38, wie einen Anpassungswiderstand aufweist. Darüber hinaus steht die dreidimensionale Leiterstruktur 6 mit Durchkontakten 39 durch die Kunststoffmasse 33 hindurch in Verbindung, welche die dreidimensionale Leiterstruktur 6 mit Außenkontakten 31 des Mikrooptikmoduls 10 verbinden.

In dieser Ausführungsform der Erfindung sind die Außenkontakte 31 auf einer Unterseite 40 des Gehäuses 2 in einem elektronischen Anschlussbereich 15 angeordnet. Damit ist es möglich, das Mikrooptikmodul 10, als ein SMD-Bauteil einzusetzen. Derartige SMD-Bauteile sind **dadurch gekennzeichnet, dass** sie als Surface Mounted Device auf einer Oberfläche einer übergeordneten Schaltungsplatine angeordnet und elektrisch mit dieser verbunden werden.

Während die Leiterstruktur 6 bereits beim Moldprozess des MID-Körpers 5 eingebracht wird oder durch Aufdampfen und Strukturieren nachträglich auf die Innenwände 32 und 35 des Hohlraums 16 aufgebracht und strukturiert wird, werden die Komponenten der Optoelektronik 4 sowie das optoelektronische Bauteil 3 erst nach dem Gießprozess des MID-Körpers 5 eingebracht und justiert. Um den Zugriff zu dem Hohlraum 16 zu erleichtern, ist ein abgewinkelter Deckel 41 vorgesehen, der aus einer Kunststoffmasse gegossen ist und mit einer Abschirmschicht 8 auf seiner Außenwand 7 abgedeckt ist.

Als weitere Besonderheit dieser Ausführungsform der Erfindung ist die IC-Komponente der Optoelektronik 4 als Halbleiterchip 37 auf einer Wärmesenke 42 aus Metall aufgebracht. Die Wärmesenke 42 ist über einen Wärmeleitungspfad 43 mit der Abschirmschicht 8 verbunden, um die Kühlwirkung zu erhöhen. Der Wärmeleitungspfad 43 und die Wärmesenke 42 sind beim Gießprozess zur Ausbildung des MID-Körpers 5 zusammen mit dem Kunststoffwellenleiter 12 in die Kunststoffmasse 33 eingegossen. Das Mikrooptikmodul 10 stellt in dieser Ausführungsform der Erfindung ein kompaktes Bauteil dar, das auf die Dimensionen von einzelnen Strahlungsleiterfasern im Bereich von Bruchteilen eines Millimeters abgestimmt ist, wobei das Gehäuse 2 in Bezug auf Höhe, Breite und Tiefe jeweils nur wenige Millimeter beansprucht.

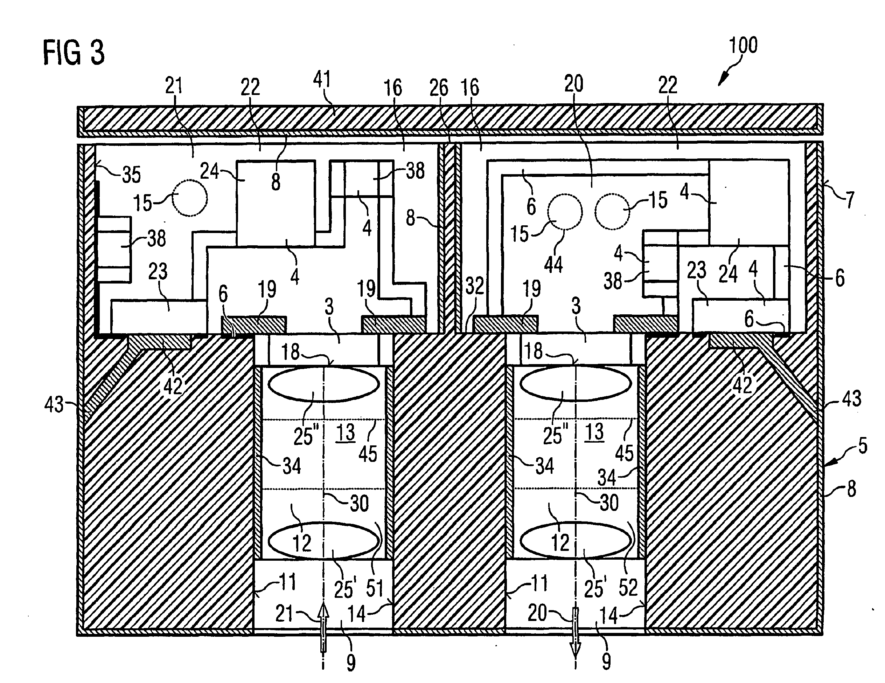

Figur 3 zeigt einen schematischen Querschnitt durch ein Mikrooptikmodul 100 einer dritten Ausführungsform der Erfindung. Komponenten mit gleichen Funktionen wie in den vorhergehenden Figuren werden mit gleichen Bezugszeichen gekennzeichnet und nicht extra erörtert.

Das Mikrooptikmodul 100 der dritten Ausführungsform der Erfindung unterscheidet sich von dem Mikrooptikmodul 10 der zweiten Ausführungsform der Erfindung gemäß Figur 2 dadurch, dass dieses Mikrooptikmodul 100 zwei Bereiche aufweist, nämlich einen Sendebereich 20 und einen Empfangsbereich 21. Im Sendebereich 20 ist das optoelektronische Bauteil 3 eine Leuchtdiode oder einer Laserdiode. Demgegenüber ist das optoelektronische Bauteil 3 im Empfangsbereich 21 eine Photodiode oder ein Phototransistor. Sowohl der Sendebereich 20, als auch der Empfangsbereich 21 weisen jeweils einen optischen Kanal 13 auf, der mit einem Kunststoffwellenleiter 12 aufgefüllt ist, wobei optische Koppelelemente 25' und 25" eine Anpassung der optischen Eigenschaften im Sendebereich 20 bzw. im Empfangsbereich 21 bewirken. Um ein Übersprechen zu dämpfen und/oder zu unterbinden, ist zwischen dem Sendebereich 20 und dem Empfangsbereich 21 eine Trennwand 26 angeordnet, die ihrerseits mit einer Abschirmschicht 8 versehen ist. Aktive Schaltelemente 23 und 24 , die zu der Optoelektronik 4 gehören, sowie passive Bauteile 38 sind in den durch die Trennwand 26 getrennten Hohlräumen angeordnet. Dabei bildet ein Leiterplattenstück 22 den Boden eines jeden Hohlraums 16. Eine dreidimensionale Leiterstruktur 6 sorgt dafür, dass sowohl im Bodenbereich, als auch an den Innenwänden 32 und 35 der Hohlräume 16, Leiterbahnen angeordnet sind.

Sowohl der Gehäusedeckel 41, als auch das Gehäuse 2 sind mit einer Abschirmschicht 8 bedeckt, die beim Abdecken des MID-Körpers 5 durch den Gehäusedeckel 41 mit der Abschirmschicht 8 auf der Trennwand 26 elektrisch verbunden wird. Mit punktierten Linien 44 werden in den Leiterplattenbereichen 22 Durchkontakte für die elektrischen Anschlussbereiche 15 nach draußen gezeigt. Die punktierten Linien 45 im Bereich der Kunststoffwellenleiter 12, zeigen hingegen das Abknicken der optischen Achse 30 der Wellenleiter 12.

Zur Herstellung eines derartigen Mikrooptikmoduls 100 werden zunächst die dreidimensionalen optischen Wellenleiter 50 und 51 mit an ihren Enden angeordneten Koppelelementen 25' und 25" spritzgegossen. Anschließend werden auf die Mantelflächen, der Wellenleiter 51 und 52 reflektierende Schichten 34 aus Metall aufgebracht. Ferner werden Wärmesenkenstrukturen 42 mit Wärmeleitungspfaden 43 vorbereitend hergestellt und anschließend werden die internen Kunststoffwellenleiter 51 und 52, sowie die Wärmesenken 42 mit ihren Wärmeleitungspfaden 43 in einer Gießform angeordnet.

Wenn die dreidimensionale Leiterstruktur 6 eine selbsttragende Struktur aus Flachleitern ist, kann auch diese bereits in der Gießform positioniert und angeordnet werden. Anschließend wird dann der MID-Körper gegossen und damit die Kunststoffwellenleiter 51 und 52, ihre Koppelelemente 25' und 25", die Wärmesenken 42 und die dreidimensionale Leiterstruktur endgültig in einer Kunststoffmasse 33 eingebettet.

Danach wird auf die Außenwand 7 des MID-Körpers 5 eine Abschirmschicht 8 aufgebracht, die auch auf die Trennwand 26 und den Deckel 41 aufgebracht wird, um das Mikrooptikmodul 100 vor Übersprechen, magnetischen und elektronischen Wellen insbesondere optischen Streustrahlen zu schützen. Dann werden die Innenwände 32 und 35 und der Bodenbereich der Hohlräume 16 mit aktiven Schaltelemente 23 und 24, sowie mit passiven Bauteilen 38 der Optoelektronik 4 bestückt. Auch die optoelektronischen Bauteile 3 können angebracht, justiert und fixiert werden. Durch das Anbringen des entsprechend vorbereiteten Gehäusedeckels 41 sind die Arbeiten zur Herstellung eines entsprechenden Mikrooptikmoduls 100 beendet.

## Patentansprüche

1. Mikrooptikmodul mit einem Gehäuse (2) das mindestens ein optoelektrisches Bauteil (3) sowie eine diesem zugeordnete Optoelektronik (4) enthält und wobei das Gehäuse (2) zumindest teilweise als MID-Körper (5), einem sogenannten Molded Interconnect Device, ausgeführt ist und mit einer zur elektrischen Kontaktierung zwischen der Optoelektronik (4) und dem mindestens einen optoelektronischen Bauteil (3) vorgesehenen dreidimensionalen Leiterstruktur (6) versehen ist, und wobei das Gehäuse (2) mindestens eine Aufnahmeöffnung (9) zum Einstecken eines Strahlungsleiters (50) in einem Einsteckbereich (11) aufweist,
**dadurch gekennzeichnet, dass**
das Gehäuse (2) mindestens einen mit einem in den MID-Körper (5) eingegossenen Kunststoffwellenleiter (12, 51, 52) aufgefüllten optischen Kanal (13) aufweist, der mit der Aufnahmeöffnung (9) optisch gekoppelt ist.

2. Mikrooptikmodul nach Anspruch 1,
**dadurch gekennzeichnet, dass**
im Innern des Gehäuses (2) mindestens ein von Wänden (32, 35) umgebener Hohlraum (16) vorgesehen ist, wobei die Wände (32, 35) einen Teil der Leiterstruktur (6) aufweisen und mit einem Teil der Bauteile der Optoelektronik (4) bestückt sind.

3. Mikrooptikmodul nach Anspruch 1 oder Anspruch 2,
**dadurch gekennzeichnet, dass**
das Gehäuse (2) über eine Außenwand (7) verfügt, die eine Abschirmschicht (8) aufweist.

4. Mikrooptikmodul nach einem der vorhergehenden Ansprüche,
**dadurch gekennzeichnet, dass**
die Aufnahmeöffnung (9) eine Linse (14) aufweist.

5. Mikrooptikmodul nach einem der vorhergehenden Ansprüche,
**dadurch gekennzeichnet, dass**
das Gehäuse (2) einen elektrischen Anschlussbereich (15) und einen optoelektronischen Einsteckbereich (14) aufweist.

6. Mikrooptikmodul nach einem der Ansprüche 2 bis 5,
**dadurch gekennzeichnet, dass**
in dem Hohlraum (16) optische Sende- und/oder Empfangsdioden angeordnet sind, deren optisch aktive Flächen (18) zu entsprechenden Kunststoffwellenleitern (12, 51, 52) hin ausgerichtet sind, und deren Elektroden (19) mit der Leiterstruktur (6) elektrisch verbunden sind.

7. Mikrooptikmodul nach einem der Ansprüche 2 bis 6,
**dadurch gekennzeichnet, dass**
der Hohlraum (16) eine Trennwand (26) aufweist, die den Hohlraum (16) in einen Sende- (20) und einen Empfangsbereich (21) trennt.

8. Mikrooptikmodul nach einem der vorhergehenden Ansprüche,
**dadurch gekennzeichnet, dass**
das Gehäuse (2) einen Boden aufweist, der eine Leiterplatte (22) mit passiven und aktiven Schaltungselementen (23, 24) und Leiterstrukturen (6) aufweist.

9. Verfahren zur Herstellung eines Mikrooptikmoduls (1, 10, 100), das folgende Verfahrensschritte aufweist:
- Spritzgießen eines dreidimensionalen optischen Wellenleiters (50),
- Einbringen und Positionieren des Kunststoffwellenleiters (12, 51, 52) und einer Leitungen aufweisenden dreidimensionalen Leiterstruktur (6) in einer Spritzgussform für ein Gehäuse (2) mit Hohlraum (16),
- Spritzgießen des zumindest teilweise als MID-Körper (5), einem sogenannten Molded Interconnect Device, ausgeführten Gehäuses (2),
- Bestücken eines Hohlraums (16) des Gehäuses (2) mit mindestens einem elektronischen Bauteil (3) und/oder einer Optoelektronik (4),
- Aufbringen einer Abschirmschicht (8) auf das Moldgehäuse (2).

10. Verfahren nach Anspruch 9,
**dadurch gekennzeichnet, dass**
vor dem Spritzgießen des Moldgehäuses (2) der Kunststoffwellenleiter (12, 51, 52) mit einer reflektierenden Schicht (34) ummantelt wird.

11. Verfahren nach Anspruch 9 oder Anspruch 10,
**dadurch gekennzeichnet, dass**
in die Enden des Kunststoffwellenleiters (12,51,52) vor dem Spritzgießen des Moldgehäuses (2) optische Kopplungselemente (25, 25', 25'') eingegossen werden.

## Claims

1. Micro-optical module with a housing (2), which contains at least one optoelectrical component (3) and also an optoelectronic unit (4) assigned thereto, and the housing (2) being at least partly embodied as an MID body (5), a so-called molded interconnect device, and being provided with a three-dimensional conductor structure (6) provided for making electrical contact between the optoelectronic unit (4) and the at least one optoelectronic component (3), and the housing (2) comprising at least one receptacle opening (9) for inserting a radiation guide (50) in an insertion region (11),
**characterized in that**
the housing (2) comprises at least one optical channel (13) which is filled with a plastic waveguide (12, 51, 52) molded into the MID body (5) and is optically coupled to the receptacle opening (9).

2. Micro-optical module according to claim 1,
**characterized in that**
at least one cavity (16) surrounded by walls (32, 35) is provided in the interior of the housing (2), the walls (32, 35) comprising a portion of the conductor structure (6) and being equipped with a portion of the components of the optoelectronic unit (4).

3. Micro-optical module according to claim 1 or claim 2,
**charactezized in that**
the housing (2) is provided with an outer wall (7) comprising a shielding layer (8).

4. Micro-optical module according to one of the preceding claims,
**characterized in that**
the receptacle opening (9) comprises a lens (14).

5. Micro-optical module according to one of the preceding claims,
**characterized in that**
the housing (2) comprises an electrical connection region (15) and an optoelectronic insertion region (14).

6. Micro-optical module according to one of claims 2 to 5, **characterized in that**
optical transmission and/or reception diodes are arranged in the cavity (16), the optically active areas (18) of said diodes being oriented toward corresponding plastic waveguides (12, 51, 52), and the electrodes (19) of said diodes being electrically connected to the conductor structure (6).

7. Micro-optical module according to one of claims 2 to 6, **characterized in that**
the cavity (16) comprises a partition (26) separating the cavity (16) into a transmission region (20) and a reception region (21).

8. Micro-optical module according to one of the preceding claims,
**characterized in that**
the housing (2) has a bottom comprising a printed circuit board (22) with passive and active circuit elements (23, 24) and conductor structures (6).

9. Method for the production of a micro-optical module (1, 10, 100), which comprises the following method steps of:
- injection-molding a three-dimensional optical waveguide (50),
- introducing and positioning the plastic waveguide (12, 51, 52) and a three-dimensional conductor structure (6) comprising lines in an injection mold for a housing (2) with cavity (16),
- injection-molding the housing (2), which is at least partly embodied as an MID body (5), a so-called molded interconnect device,
- equipping a cavity (16) of the housing (2) with at least one electronic component (3) and/or an optoelectronic unit (4),
- applying a shielding layer (8) to the molded housing (2).

10. Method according to claim 9,
**characterized in that**
prior to the injection-molding of the molded housing (2), the plastic waveguide (12, 51, 52) is sheathed with a reflective layer (34).

11. Method according to claim 9 or claim 10,
**characterized in that**
optical coupling elements (25, 25', 25'') are molded into the ends of the plastic waveguide (12, 51, 52) prior to the injection-molding of the molded housing (2).

## Revendications

1. Module micro-optique qui comporte un boîtier (2) qui contient au moins un composant opto-électrique (3) auquel est associée une opto-électronique (4), le boîtier (2) étant réalisé au moins en partie sous la forme d'un corps MID (5), à savoir un "Molded Interconnect Device" (dispositif moulé d'interconnexion), et étant doté d'une structure conductrice tridimensionnelle (6) étant prévue pour faire contact électrique entre l'opto-électronique (4) et le ou les composants opto-électroniques (3), le boîtier (2) présentant au moins une ouverture de réception (9) pour enficher un guide de rayonnement (50) dans une zone d'enfichage (11),
**caractérisé en ce que**
le boîtier (2) présente au moins un canal optique (13) rempli d'un guide d'ondes (12, 51, 52) en matière synthétique coulé dans le corps MID (5) et couplé optiquement à l'ouverture de réception (9).

2. Module micro-optique selon la revendication 1, **caractérisé en ce qu'**au moins une cavité (16) entourée par des parois (32, 35) est prévue à l'intérieur du boîtier (2), les parois (32, 35) présentant une partie de la structure conductrice (6) et étant équipées d'une partie des composants de l'opto-électronique (4).

3. Module micro-optique selon la revendication 1 ou la revendication 2, **caractérisé en ce que** le boîtier (2) dispose d'une paroi extérieure (7) qui présente une couche de blindage (8).

4. Module micro-optique selon l'une des revendications précédentes, **caractérisé en ce que** l'ouverture de réception (9) présente une lentille (14).

5. Module micro-optique selon l'une des revendications précédentes, **caractérisé en ce que** le boîtier (2) présente une zone de bornes de raccordement électrique (15) et une zone d'enfichage opto-électronique (14).

6. Module micro-optique selon l'une des revendications 2 à 5, **caractérisé en ce que** des diodes d'émission et/ou de réception optique, dont les surfaces optiquement actives (18) sont orientées vers des guides d'ondes (12, 51, 52) en matière synthétique correspondants et dont les électrodes (19) sont reliées électriquement à la structure conductrice (6) sont disposées dans la cavité (16).

7. Module micro-optique selon l'une des revendications 2 à 6, **caractérisé en ce que** la cavité (16) présente une paroi de séparation (26) qui sépare la cavité (16) en une zone d'émission (20) et une zone de réception (21).

8. Module micro-optique selon l'une des revendications précédentes, **caractérisé en ce que** le boîtier (2) présente un fond qui est doté d'une plaque conductrice (22) équipée d'éléments de circuit passifs et actifs (23, 24) et de structures conductrices (6).

9. Procédé de fabrication d'un module micro-optique (1, 10, 100) qui présente les étapes suivantes:
- moulage par injection d'un guide d'ondes optiques tridimensionnel (50),
- insertion et positionnement du guide d'ondes (12, 51, 52) en matière synthétique et d'une structure conductrice (6) tridimensionnelle qui présente des conducteurs dans un moule de moulage par injection pour un boîtier (2) doté d'une cavité (16),
- moulage par injection du boîtier (2) réalisé au moins en partie sous la forme d'un corps MID (5), à savoir un "Molded Interconnect Device" (dispositif moulé d'interconnexion),
- équipement d'une cavité (16) du boîtier (2) d'au moins un composant électronique (3) et/ou d'une opto-électronique (4),
- placement d'une couche de blindage (8) sur le boîtier moulé (2).

10. Procédé selon la revendication 9, **caractérisé en ce qu'**avant le moulage par injection du boîtier moulé (2), le guide d'ondes (12, 51, 52) en matière synthétique est enveloppé d'une couche réfléchissante (34).

11. Procédé selon la revendication 9 ou la revendication 10, **caractérisé en ce que** des éléments de couplage optique (25, 25', 25") sont moulés dans les extrémités du guide d'ondes (12, 51, 52) en matière synthétique avant le moulage par injection du boîtier moulé (2).
